# EUROPÄISCHE PATENTSCHRIFT

(11) **EP 3 540 328 B1**
(45) Veröffentlichungstag und Bekanntmachung des Hinweises auf die Patenterteilung: **03.06.2020**
(21) Anmeldenummer: 19162042.6
(22) Anmeldetag: 11.03.2019
(51) Int. Cl.: F24H 8/00, F24F 13/22, E03C 1/28, E03F 5/04, F25B 30/00

(54) **ABLAUFEINRICHTUNG**
DRAINAGE DEVICE
AGENCEMENT D'ÉVACUATION

(30) Priorität: 14.03.2018 DE 102018105938
(43) Veröffentlichungstag der Anmeldung: 18.09.2019
(73) Patentinhaber: FingerHaus GmbH, 35066 Frankenberg (DE)
(72) Erfinder: Burckhardt, Michael-John, 34621 Frielendorf (DE)
(74) Vertreter: Patentanwälte Olbricht Buchhold Keulertz

(56) Entgegenhaltungen:
- EP-A2- 0 807 721
- CN-U- 202 074 666
- DE-A1-102006 053 751
- JP-A- 2017 201 079

## Beschreibung

Die Erfindung betrifft eine Ablaufeinrichtung gemäß dem Oberbegriff von Anspruch 1 und eine Wärmepumpen- und/oder Lüftungsvorrichtung, deren Kondensatablauf mit einer solchen Ablaufeinrichtung verbunden ist nach Anspruch 13.

Ablaufeinrichtungen werden im Stand der Technik dazu eingesetzt, beispielsweise Kondensat von einer Wärmepumpen- und/oder Lüftungsvorrichtung in ein Entwässerungskanalsystem zu überführen. Diese Wärmepumpen- und/oder Lüftungsvorrichtungen dienen der Temperierung und/oder kontrollierten Gebäudelüftung (beispielsweise auch als kontrollierte Wohnraumlüftung (KWL) bezeichnet) und werden oftmals direkt auf der Bodenplatte installiert, sodass sie einen sehr niedrigen Kondensatablauf haben. Der Kondensatablauf dient dazu, gesammeltes Kondensat abzuleiten, das insbesondere auf der Unterdruckseite der Wärmepumpenvorrichtung an kalten Bauteilen oder an Wärmetauschern der Lüftungsvorrichtung anfällt. Meist liegt der Kondensatablauf nur knapp über der Bodenplatte.

Dabei ist problematisch, dass oftmals kein Bodenablauf in der Bodenplatte vorgesehen ist, sondern eine Entwässerungsrohrleitung oberhalb von der Bodenplatte durch eine Gebäudewand führt. Damit liegt oftmals fast überhaupt kein Leitungsgefälle vor. Trotzdem muss in geeigneter Weise ein Geruchsverschluss in der Art eines Siphons bereitgestellt werden, um zu verhindern, dass Gerüche aus der Entwässerungsrohrleitung in das Gebäude gelangen. In der Praxis führen Handwerkerkonstruktionen zur Herstellung des Geruchsverschlusses aus Standardrohrbauteilen oftmals zu einem Austritt von Kondensat, weil bei der Montage beispielsweise der Rückstau in das Gehäuse der Wärmepumpen- und/oder Lüftungsvorrichtung unberücksichtigt bleibt. In der Folge tritt in der Betriebszeit der Wärmepumpen- und/oder Lüftungsvorrichtung Kondensat aus und es kommt zu Feuchteschäden am Gebäude, die oftmals erst spät bemerkt werden. Der starke Trend hin zur Wärmepumpentechnik als Gebäudeheizungsanlage verschärft diese Problematik.

Aus JP 2017 201079 A ist ein trichterförmiger Bodenablauf mit einem seitlich am trichterförmigen Gehäuse angeordneten Ablauf bekannt.

DE 10 2006 053 751 A1 lehrt einen Bodenablauf mit einem komplex ausgestalteten Gehäuse, in dem ein Überlauf ausgebildet ist, hinter dem sich ein seitlicher Ablauf befindet.

EP 0 807 721 A2 offenbart eine Ablaufarmatur für Dusch- und Badewannen für Keller, Balkone, Terrassen. Dieses weist ein topfförmiges Gehäuse auf, aus dem seitlich ein Ablaufrohr ausmündet.

Aus CN 202074666 U ist eine Ablaufeinrichtung mit einem kugelförmigen Gehäuse bekannt, in das ein Tauchrohr einmündet, und das einen seitlich angeordneten Ablauf aufweist.

Aufgabe der Erfindung ist es deshalb, eine Ablaufeinrichtung und eine Wärmepumpen- und/oder Lüftungsvorrichtung zu entwickeln, welche einfach und kostengünstig hinsichtlich der Kondensatableitung zu montieren sind und im Betrieb ein dauerhaft sicheres Ableiten von Kondensat auch bei geringen Leitungsgefällen erlaubt, um Wasserschäden zu vermeiden. Die Ablaufeinrichtung ist dabei vorzugsweise kompatibel und nachrüstbar bei einer Vielzahl von Wärmepumpen- und/oder Lüftungsanlagenmodellen, soll einen Geruchsverschluss ausbilden, und soll einfach gegen Rückstau sicherbar sein, sodass auch Wasserschäden durch Rückstau vermieden werden.

Hauptmerkmale der Erfindung sind in Anspruch 1 und Anspruch 13 angegeben. Ausgestaltungen sind Gegenstand der Ansprüche 2 bis 12 und 14 bis 15.

Die Erfindung betrifft eine Ablaufeinrichtung mit einem als Sammelbehälter ausgebildeten Gehäuse mit einem geodätisch unten angeordneten Gehäuseboden, einem in das Gehäuse einmündenden Zulauf und einem geodätisch seitlich am Gehäuse angeordneten Ablauf, wobei der Ablauf eine Durchtrittsöffnung aufweist, die einen geodätisch untenliegenden Überlaufscheitel ausbildet, der höher angeordnet ist als der Gehäuseboden. Durch letzteres kann insbesondere eine Stauhöhe im Gehäuse für ein Fluid zwischen dem Gehäuseboden und dem Überlaufscheitel definiert werden. Weiterhin weist der Zulauf eine Zulauföffnung auf, die in das Gehäuse mündet und geodätisch tiefer angeordnet ist als der Überlaufscheitel. Dadurch wird im Gehäuse insbesondere eine auf Fluid basierende Geruchsverschlusshöhe zwischen der Zulauföffnung und dem Überlaufscheitel definiert. Der Ablauf weist einen horizontal verlaufenden Ablaufrohrabschnitt mit einer Rohrquerschnittsfläche auf, die (insbesondere als Ganzes) höher angeordnet ist als der Gehäuseboden, wobei der Überlaufscheitel geodätisch oberhalb von einem geodätisch untenliegenden Ende der Rohrquerschnittsfläche angeordnet ist. Damit lässt sich insbesondere erreichen, dass die Stauhöhe höher liegt als dieses untenliegende Ende der Rohrquerschnittsfläche.

Vorteilhaft an dieser Ausgestaltung ist, dass obwohl der Ablaufrohrabschnitt recht tief am Gehäuse platziert sein kann, die Stauhöhe mittels dem Überlaufscheitel nach oben verlagert ist. Damit ist der Aufbau der Ablaufeinrichtung flach ausführbar und es wird dennoch eine große Fluidsäule für den Geruchsverschluss erzielt. Gegenüber einem als Rohrbogen ausgeführten Siphon ist außerdem ein vergleichsweise großes flaches Gehäuse bereitstellbar, sodass in der betriebslosen Zeit der Wärmepumpen- und/oder Lüftungsvorrichtung relativ lange ein sicherer Geruchsverschluss erzielt wird. Es steht nämlich ein vergleichsweise großes Fluidvolumen bereit, das zunächst verdunsten müsste. Dabei sollte das Gehäuse mit Ausnahme des Zulaufs und des Ablaufs fluiddicht ausgebildet sein. Hierdurch wird Verdunstung vermieden und selbst bei einem Rückstau tritt zumindest im Bereich der Ablaufeinrichtung kein Fluid aus. Alle Richtungsangaben mit Bezug auf die Geodäsie beziehen sich auf eine Ausrichtung in der für den Betrieb vorgesehenen Montagelage.

Die Rohrquerschnittsfläche des horizontal verlaufenden Ablaufrohrabschnitts weist eine geodätisch vertikale Erstreckung auf, wobei der Überlaufscheitel vorzugsweise im geodätisch oben angeordneten 2/3-Bereich der vertikalen Erstreckung angeordnet ist. Damit liegt der Überlaufscheitel hoch und trotzdem kann die Durchtrittsöffnung noch eine recht große Querschnittsfläche haben. Dabei ist zu bevorzugen, dass sich die Durchtrittsöffnung geodätisch zumindest im Wesentlichen bis an das obere Ende der vertikalen Erstreckung der Rohrquerschnittsfläche erstreckt. Damit wird die verfügbare Höhe voll ausgenutzt, die Ablaufeinrichtung ist flach ausgestaltbar und kann auf einfache Weise gegen Rückstau gesichert werden.

In einer Ausgestaltungsvariante besteht das Gehäuse aus Kunststoff, vorzugsweise aus einem Kunststoff aus der Gruppe Polyethylen (PE) oder Polypropylen (PP), Polyvinylchlorid (PVC), Styrol-Copolymerisate (ABS/ASA) und Polyesterharz (UP). Damit kann ein geeignetes Material passend zu einer sich anschließenden Entwässerungsleitung ausgewählt werden.

Weiterhin kann vorgesehen sein, dass der Zulauf aus Kunststoff besteht, vorzugsweise aus einem Kunststoff aus der Gruppe Polyethylen (PE) oder Polypropylen (PP), Polyvinylchlorid (PVC), Styrol-Copolymerisate (ABS/ASA) und Polyesterharz (UP).

Schließlich kann der horizontal verlaufende Ablaufrohrabschnitt aus Kunststoff bestehen, vorzugsweise aus einem Kunststoff aus der Gruppe Polyethylen (PE) oder Polypropylen (PP), Polyvinylchlorid (PVC), Styrol-Copolymerisate (ABS/ASA) und Polyesterharz (UP). Dies Kunststoffe haben sich jeweils für Leitungen in der Gebäudetechnik bewährt.

Gemäß einer speziellen Ausgestaltung der Erfindung ist die Durchtrittsöffnung des Ablaufs in einer Blende ausgebildet. Eine solche ist wenig komplex, einfach herstellbar und platzsparend. Dabei bietet sich als Material an, dass die Blende aus Kunststoff besteht, vorzugsweise aus einem Kunststoff aus der Gruppe Polyethylen (PE) oder Polypropylen (PP), Polyvinylchlorid (PVC), Styrol-Copolymerisate (ABS/ASA) und Polyesterharz (UP). Besonders platzsparend kann eine Variante ausgeführt sein, bei der die Blende auf der in Richtung Gehäuse weisenden Seite flach ausgebildet ist.

In einer Anordnungsoption sitzt die Blende in dem horizontal verlaufenden Ablaufrohrabschnitt. Entsprechend klein und platzsparend ist die Blende anordenbar.

Dabei ist eine Ausführung realisierbar, gemäß der die Blende aus Richtung des Gehäuses kommend in den horizontal verlaufenden Ablaufrohrabschnitt eingesetzt ist. Nachdem sie von innen eingesetzt ist, z.B. durch Herstellermontage, wird ein Handwerker deren Position nicht mehr verändern und es wird eine Montagefehlerquelle vermieden.

Gemäß einer besonderen Ausführungsform ist die Blende durch einen Deckel ausgebildet, wobei die Durchtrittsöffnung in dem Deckel ausgebildet ist. Ein Deckel lässt sich auf einfache Weise in seinem Sitz montieren, der hierzu am Gehäuse und/oder horizontal verlaufenden Ablaufrohrabschnitt auszubilden ist.

Eine hohe Kompatibilität der Ablaufeinrichtung ohne Sonderlösungen des Monteurs wird erreicht, wenn der horizontal verlaufende Ablaufrohrabschnitt aus der Gruppe DN 40, DN 50, DN 70, DN 80, DN 110 und DN 125 ist. Eine Ausbildung des Ablaufrohrabschnitts als Stutzen ist ebenfalls von Vorteil, denn meistens wird eine Muffe als Anschluss der Entwässerungsrohrleitung zur Verfügung stehen.

Die erfindungsgemäße Ablaufeinrichtung ist besonders kostengünstig herstellbar, weil diese ein (vorzugsweise genormtes) Übergangsrohrstück aufweist, das eine Reduktion von einem ersten Rohrabschnitt mit einem größeren Rohrquerschnitt auf einen zweiten Rohrabschnitt mit einem kleineren Rohrquerschnitt ausbildet, wobei das Gehäuse von dem ersten Rohrabschnitt und einem Verschlusselement, das das freie Ende des ersten Rohrabschnitts verschließt, ausgebildet ist, und wobei der horizontal verlaufende Ablaufrohrabschnitt von dem zweiten Rohrabschnitt ausgebildet ist. Derartige Übergangsrohrstücke existieren nämlich in recht großer Variantenvielzahl als Fertigteile und es sind entsprechend keine Spezialwerkzeuge für die Herstellung des Gehäuses und des horizontal verlaufenden Ablaufrohrabschnitts notwendig. Selbst die Verschlusselemente existieren als Fertigware.

Vorzugsweise sind der erste und der zweite Rohrabschnitt des Übergangsrohrabschnitts gleich ausgerichtet, insbesondere achsparallel ausgerichtet, und in der Einbaulage insbesondere horizontal ausgerichtet. Weiter bevorzugt ist der zweite Rohrabschnitt versetzt zum ersten Rohrabschnitt angeordnet. Hierbei ist ein Versatz zu bevorzugen, bei dem der zweite Rohrabschnitt geodätisch höher angeordnet ist als der erste Rohrabschnitt. Vorzugsweise liegt der Rohrquerschnitt des zweiten Rohrabschnitts aber noch ganz oder zumindest zur Hälfte in der horizontalen Projektion des Rohrquerschnitts des ersten Rohrabschnittes. Dabei gibt es kurze Übergangsrohrstücke mit sprunghafter Querschnittsveränderung, die eingesetzt werden können. Bevorzugt wird jedoch ein Übergangsrohrstück eingesetzt, bei dem zwischen dem ersten und zweiten Rohrabschnitt ein Reduktionsabschnitt angeordnet ist, insbesondere ein trichterförmiger Reduktionsabschnitt. Dieser bildet einen langsameren Querschnittsübergang aus. Als Material bietet es sich an, dass das Übergangsrohrstück aus Kunststoff besteht, vorzugsweise aus einem Kunststoff aus der Gruppe Polyethylen (PE) oder Polypropylen (PP), Polyvinylchlorid (PVC), Styrol-Copolymerisate (ABS/ASA) und Polyesterharz (UP). Für das Verschlusselement bieten sich die gleichen Materialien an.

Nach einer optionalen Ausgestaltung ist der erste Rohrabschnitt aus der Gruppe DN 70, DN 80, DN 100, DN 110, DN 125 und DN 160. Entsprechend kann ein Fertigteil als Übergangsrohrstück für die Ablaufeinrichtung verwendet werden.

Weiterhin ist gemäß einer Ausführungsvariante vorgesehen, dass der Zulauf ein Tauchrohr aufweist, das innerhalb von dem Gehäuse geodätisch bis unter den Überlaufscheitel ragt und endseitig die Zulauföffnung ausbildet. Rohre stehen in großer Vielzahl als Fertigbauteile zur Verfügung und halten die Gesamtkosten der Ablaufeinrichtung gering. Bevorzugt besteht das Tauchrohr aus Kunststoff, insbesondere aus einem Kunststoff aus der Gruppe Polyethylen (PE) oder Polypropylen (PP), Polyvinylchlorid (PVC), Styrol-Copolymerisate (ABS/ASA) und Polyesterharz (UP). Dieser ist leicht, preiswert und beständig. Optional kann das Tauchrohr oberhalb von dem Gehäuseboden durch das Gehäuse in dessen Innenraum hineinragen, vorzugsweise geodätisch von oben. Damit ist die potentiell zu Undichtigkeit neigende Durchführung des Tauchrohres durch das Gehäuse oberhalb von dem Überlaufscheitel angeordnet und es kann hier keine Flüssigkeit austreten.

Vorzugsweise beträgt die Sperrwasserhöhe der Ablaufeinrichtung wenigstens 50 mm. Hierzu sollte der Zulauf wenigstens 50 mm unterhalb des Überlaufscheitels angeordnet sein. Hierdurch wird auch bei längeren Betriebspausen, beispielsweise im Sommer, hinreichend lange ein ausreichender Geruchsverschluss bereitgestellt.

Außerdem ist es zu bevorzugen, wenn das Sperrwasservolumen, also das Flüssigkeitsvolumen zwischen dem Zulauf und dem Überlaufscheitel wenigstens 0,52 I beträgt. Durch das vergleichsweise große Flüssigkeitsvolumen wird auch bei längeren Betriebspausen, hinreichend lange ein ausreichender Geruchsverschluss bereitgestellt, denn die Verdunstungsdauer bis zur Unterschreitung der Höhe des Zulaufs ist lang. So liegt das Sperrwasservolumen insbesondere bei Dusch-, Badewannen- und Waschbeckenabläufen meist unter 0,25 I.

Des Weiteren sollte die Ablaufeinrichtung im Bereich des kleinsten Querschnitts einen Mindestdurchfluss von 0,8 I/s haben. Hierdurch sind auch große Kondenswassermengen schnell ableitbar, ohne dass es zu einem Rückstau kommt. Dies ist deutlich mehr als beispielsweise bei Duschwannenabläufen für bodenebene Duschen, die lediglich bis zu 0,4 I/s Mindestdurchfluss erreichen. Erzielbar ist der Mindestdurchfluss von 0,8 I/s insbesondere, indem der Strömungsquerschnitt im Bereich des minimalen Durchmessers 30 mm beträgt, bzw. ein nicht-kreisrunder minimaler Strömungsquerschnitt wenigstens 7 cm² beträgt.

Je nach der anzuschließenden Fluidquelle kann der Zulauf einen Zulaufanschlussstutzen oder einen Zulauftrichter aufweisen, der mit dem Tauchrohr strömungsverbunden ist. In einen Zulauftrichter kann beispielsweise ein Hahn ausmünden. Ein Zulaufanschlussstutzen ist insbesondere zum Anschluss eines Rohres oder Schlauches geeignet. Dabei sollte der Zulaufanschlussstutzen einen Durchmesser zwischen 1.905cm und 2.54cm ( 3/4" und 1") haben. Es bietet sich auch hier an, dass der Zulauftrichter oder der Zulaufanschlussstutzen aus Kunststoff besteht, vorzugsweise aus einem Kunststoff aus der Gruppe Polyethylen (PE) oder Polypropylen (PP), Polyvinylchlorid (PVC), Styrol-Copolymerisate (ABS/ASA) und Polyesterharz (UP).

Zur Absicherung gegen rückwärts einströmendes Wasser, z.B. bei starken Regenfällen, kann die Ablaufeinrichtung optional dadurch ergänzt sein, dass diese auf Seiten des Ablaufrohrabschnitts eine Rückstauklappe aufweist. Diese sollte insbesondere ein Ausströmen von Fluid aus dem Gehäuse und durch den Ablaufrohrabschnitt freigeben und ein Einströmen von Fluid aus Richtung von dem Ablaufrohrabschnitt in das Gehäuse sperren.

Ein besonders flacher Aufbau wird erzielt, wenn das Gehäuse eine geodätisch oben angeordnete Gehäusedecke aufweist, wobei die Rohrquerschnittsfläche des horizontal verlaufenden Ablaufrohrabschnitts geodätisch nicht höher angeordnet ist als die Gehäusedecke.

Die Erfindung betrifft außerdem eine Wärmepumpen- und/oder Lüftungsvorrichtung, insbesondere für Gebäude, mit einem Kondensatablauf, der in den Zulauf einer Ablaufeinrichtung, wie sie vor- und nachstehen beschrieben ist, einmündet. Bei einer solchen Kombination kann selbst dicht über dem Aufstellungsboden anfallendes Kondenswasser sicher über die Ablaufeinrichtung abgeführt werden und ein Geruchsdurchtritt sowie Wasserschäden werden wirksam vermieden. Die Variante der Wärmepumpenvorrichtung verfügt vorzugsweise über einen Verdichter, eine Drossel, einen Kondensator und einen Verdampfer. Das Kondensat fällt typischerweise auf der Seite des Verdampfers an. Bei Wärmepumpenvorrichtungen mit Umkehrbetrieb können der Verdampfer und der Kondensator ihre Funktion tauschen. Die alternative Variante der Lüftungsvorrichtung weist vorzugsweise einen Wärmetauscher auf, beispielsweise einen Gegenstromwärmetauscher oder Kreuzgegenstromwärmetauscher. Hier fällt das Kondensat typischerweise in dem Strömungskanal an, in dem sich der Luftstrom in Strömungsrichtung abkühlt. Je nach Betrieb kann dies beispielsweise in ein Gebäude hineinströmende oder aus diesem herausströmende Luft sein. In der Kombination der Wärmepumpen- und Lüftungsvorrichtung wird ein Luftstrom mittels der Wärmepumpe temperiert.

Vorzugsweise ist der Ablaufrohrabschnitt an eine Entwässerungsrohrleitung angeschlossen. Damit lässt sich das Fluid wegleiten. Die Vorteile des flachen Aufbaus der Ablaufeinrichtung kommen vor allem zur Geltung, wenn die Entwässerungsrohrleitung auf der geodätischen Höhe des horizontal verlaufenden Ablaufrohrabschnitts durch eine Gebäudewand führt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schemaskizze einer Ablaufeinrichtung mit einem Zulaufanschlussstutzen von der Seite;
- Fig. 2: eine Schemaskizze einer Ablaufeinrichtung mit einem Zulaufanschlussstutzen von oben;
- Fig. 3: eine Schemaskizze einer Ablaufeinrichtung mit einem Zulaufanschlussstutzen im Querschnitt;
- Fig. 4: eine Schemaskizze einer Ablaufeinrichtung mit einem Zulauftrichter von der Seite;
- Fig. 5: eine Schemaskizze einer Ablaufeinrichtung mit einem Zulauftrichter im Querschnitt; und
- Fig. 6: eine Schemaskizze einer Wärmepumpenvorrichtung mit einer Ablaufeinrichtung nach Fig. 1.

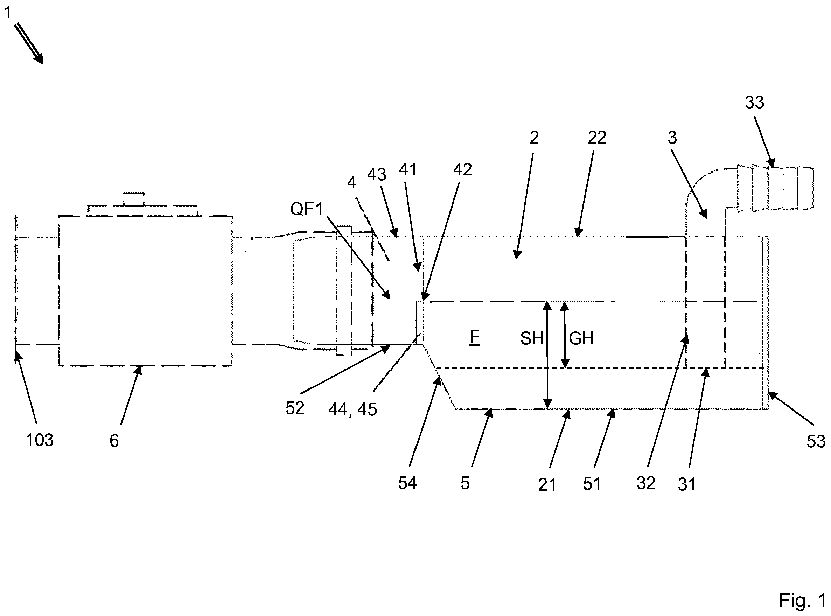

**Fig. 1** zeigt eine Schemaskizze einer Ablaufeinrichtung 1 von der Seite. Diese Ablaufeinrichtung 1 weist ein als Sammelbehälter ausgebildetes Gehäuse 2 mit einem geodätisch unten angeordneten Gehäuseboden 21, einen in das Gehäuse 2 einmündenden Zulauf 3 und einen geodätisch seitlich am Gehäuse 2 angeordneten Ablauf 4 auf. Das Gehäuse 2 ist mit Ausnahme des Zulaufs 3 und des Ablaufs 4 fluiddicht ausgebildet.

Der Ablauf 4 hat eine Durchtrittsöffnung 41, die einen geodätisch untenliegenden Überlaufscheitel 42 ausbildet. Letzterer ist höher angeordnet als der Gehäuseboden 21, sodass eine Stauhöhe SH im Gehäuse 2 für ein Fluid F zwischen dem Gehäuseboden 21 und dem Überlaufscheitel 42 definiert ist.

Auf Seiten des Zulaufs 3 ist eine Zulauföffnung 31 vorgesehen, die in das Gehäuse 2 mündet und geodätisch tiefer angeordnet ist als der Überlaufscheitel 42. Hierdurch ist im Gehäuse 2 eine auf Fluid F basierende Geruchsverschlusshöhe GH zwischen der Zulauföffnung 31 und dem Überlaufscheitel 42 definiert.

Weiterhin verfügt der Ablauf 4 über einen horizontal verlaufenden Ablaufrohrabschnitt 43 mit einer Rohrquerschnittsfläche QF1, die als Ganzes höher angeordnet ist als der Gehäuseboden 21. Dabei hat das Gehäuse 2 eine geodätisch oben angeordnete Gehäusedecke 22, wobei die Rohrquerschnittsfläche QF1 des horizontal verlaufenden Ablaufrohrabschnitts 43 als Ganzes geodätisch nicht höher angeordnet ist als diese Gehäusedecke 22. Der Überlaufscheitel 42 ist geodätisch oberhalb von einem geodätisch untenliegenden Ende der Rohrquerschnittsfläche QF1 angeordnet, womit die Stauhöhe SH des Fluids F höher liegt als dieses untenliegende Ende der Rohrquerschnittsfläche QF1. Insbesondere weist die Rohrquerschnittsfläche QF1 eine geodätisch vertikale Erstreckung auf und der Überlaufscheitel 42 ist im geodätisch oben angeordneten 2/3-Bereich der vertikalen Erstreckung angeordnet. Die Durchtrittsöffnung 41 erstreckt sich von dem Überlaufscheitel 42 geodätisch zumindest im Wesentlichen bis an das obere Ende der vertikalen Erstreckung der Rohrquerschnittsfläche QF1 heran.

Eine solche Durchtrittsöffnung 41 des Ablaufs 4 kann in der optionalen Blende 44 ausgebildet sein, die auf der in Richtung Gehäuse 2 weisenden Seite flach ausgebildet ist. Die Blende 44 sitzt bevorzugt in dem horizontal verlaufenden Ablaufrohrabschnitt 43 und kann hierzu aus Richtung des Gehäuses 2 kommend in den horizontal verlaufenden Ablaufrohrabschnitt 43 einsetzbar ausgestaltet sein. Bevorzugt ist die Blende 44 durch einen Deckel 45 ausgebildet, wobei die Durchtrittsöffnung 41 in dem Deckel 45 ausgebildet ist.

Für eine hohe Kompatibilität mit Gebäudeentwässerungsleitungen sollte der horizontal verlaufende Ablaufrohrabschnitt 43 ein Stutzen aus der Gruppe DN 40, DN 50, DN 70, DN 80, DN 110 und DN 125 sein.

Vorliegend weist die Ablaufeinrichtung 1 ein Übergangsrohrstück 5 auf, das eine Reduktion von einem ersten Rohrabschnitt 51 mit einem größeren Rohrquerschnitt auf einen zweiten Rohrabschnitt 52 mit einem kleineren Rohrquerschnitt ausbildet. Das Gehäuse 2 ist von dem ersten Rohrabschnitt 51 und einem Verschlusselement 53 ausgebildet, wobei das Verschlusselement 53 das freie Ende des ersten Rohrabschnitts 51 verschließt. Der horizontal verlaufende Ablaufrohrabschnitt 43 ist von dem zweiten Rohrabschnitt 52 ausgebildet. Zwischen dem ersten und zweiten Rohrabschnitt 51, 52 ist ein Reduktionsabschnitt 54 angeordnet. Der erste Rohrabschnitt 51 hat einen größeren Durchmesser als der zweite Rohrabschnitt 52 und stammt aus der Gruppe DN 70, DN 80, DN 100, DN 110, DN 125 und DN 160.

Der Zulauf 3 weist ein Tauchrohr 32 auf, das oberhalb von dem Gehäuseboden 21 geodätisch von oben durch das Gehäuse 2 in dessen Innenraum hineinragt. Innerhalb von dem Gehäuse 2 ragt das Tauchrohr 32 geodätisch bis unter den Überlaufscheitel 42 und bildet endseitig die Zulauföffnung 31 aus. Außerdem weist der Zulauf 3 einen Zulaufanschlussstutzen 33 auf, der mit dem Tauchrohr 32 strömungsverbunden ist. Hieran lässt sich ein Schlauch, ein Rohr oder eine sonstige Fluidleitung anschließen. Hierzu sollte der Zulaufanschlussstutzen 33 einen Durchmesser zwischen 1.905cm und 2.54cm (3/4" und 1") haben.

Des Weiteren mündet der Ablaufrohrabschnitt 43 in eine optionale Rückstauklappe 6, sodass ein Ausströmen von Fluid F aus dem Gehäuse 2 und durch den Ablaufrohrabschnitt 43 freigegeben und ein Einströmen von Fluid F aus Richtung von dem Ablaufrohrabschnitt 43 in das Gehäuse 2 gesperrt ist. An die Rückstauklappe 6 ist eine Entwässerungsrohrleitung 103 angeschlossen.

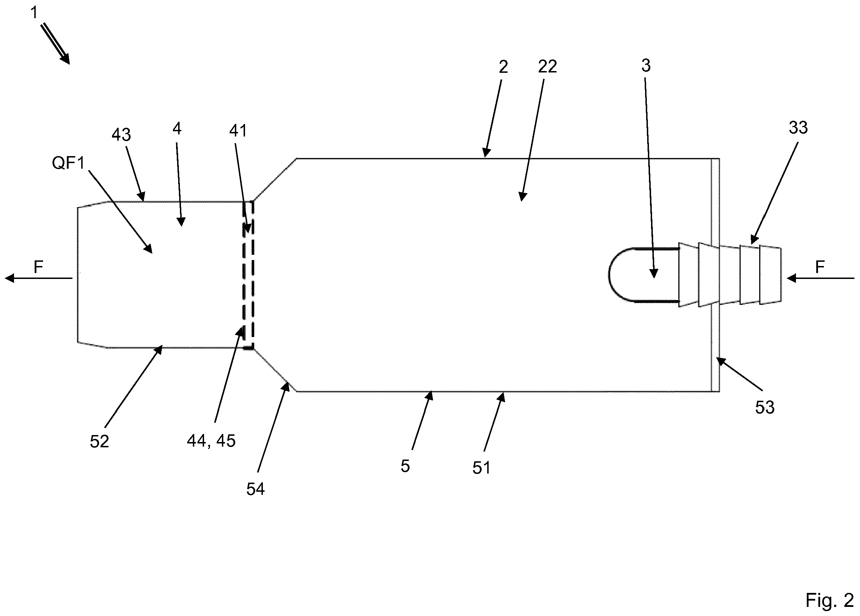

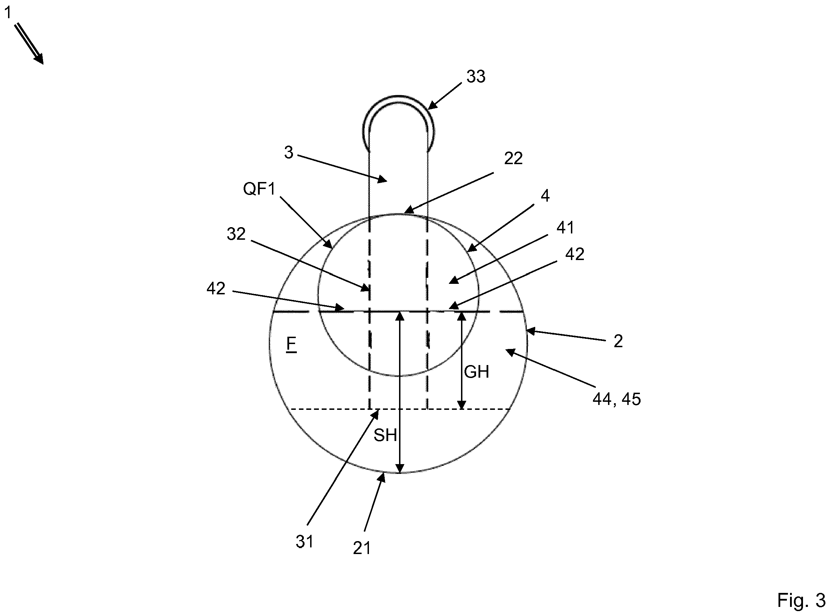

In **Fig. 2** ist eine Schemaskizze der Ablaufeinrichtung 1 gemäß Fig. 1 mit dem Zulaufanschlussstutzen 33 von oben zu sehen. Zusätzlich ist in **Fig. 3** eine Schemaskizze der Ablaufeinrichtung 1 mit dem Zulaufanschlussstutzen 33 gemäß Fig. 1 im Querschnitt dargestellt. Entsprechend wird bezüglich den Fig. 2 und 3 auf die Ausführungen zu Fig. 1 verwiesen.

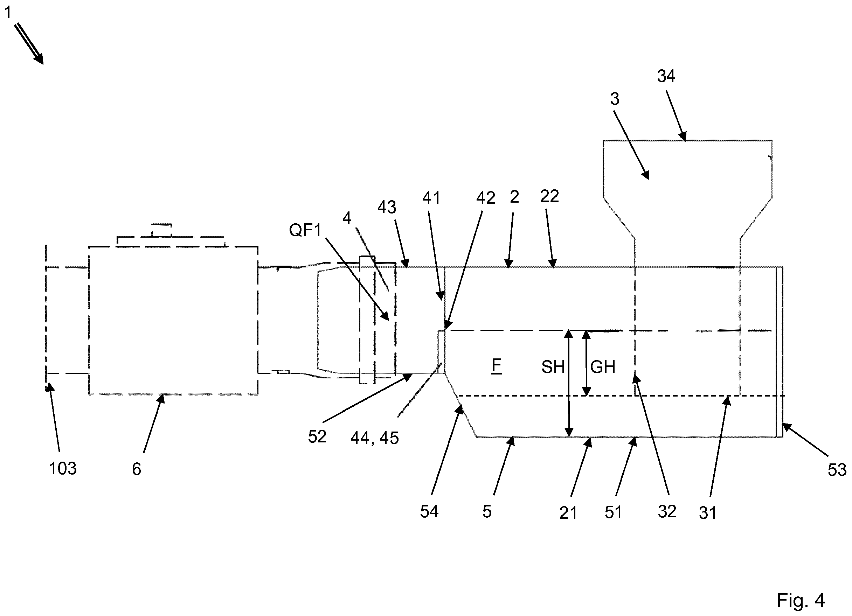

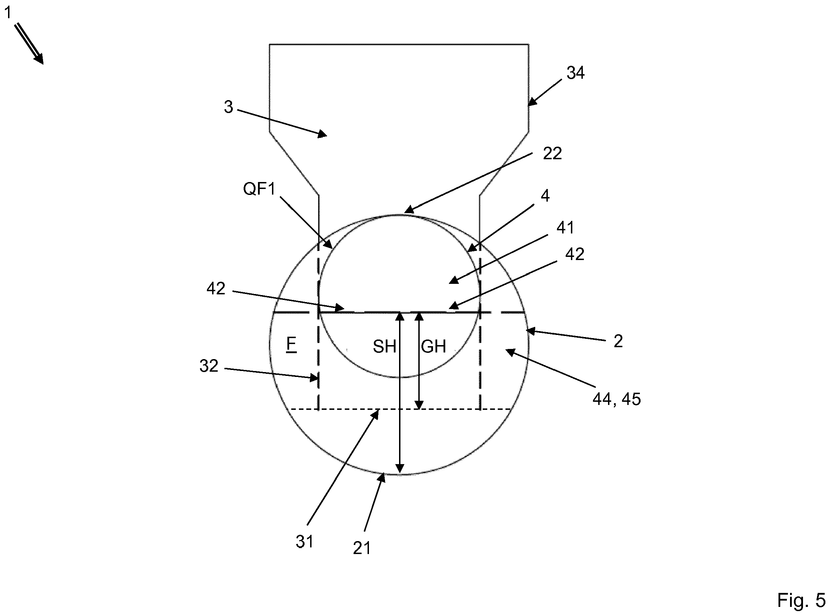

Abweichend zu der Ausführung nach Fig. 1 ist in **Fig. 4** eine Schemaskizze einer Ablaufeinrichtung 1 mit einem Zulauftrichter 34 von der Seite zu sehen. Insbesondere weist die Ablaufeinrichtung 1 nach Fig. 4 anstatt des Zulaufanschlussstutzen 33 gemäß Fig. 1 einen Zulauftrichter 34 auf, der mit dem Tauchrohr 32 strömungsverbunden ist. Aus **Fig. 5** geht eine Schemaskizze der Ablaufeinrichtung 1 mit dem Zulauftrichter 34 gemäß Fig. 4 im Querschnitt hervor. Im Weiteren wird bezüglich den Fig. 4 und 5 daher auf die Ausführungen zu den Fig. 1 bis 3 verwiesen.

Unabhängig von den Figuren 1, 2, 3, 4, 5 und 6 eignet sich als Material für das Gehäuse 2, den Zulauf 3, den horizontal verlaufenden Ablaufrohrabschnitt 43, die Blende 44, das Übergangsrohrstück 5, das Verschlusselement 53, das Tauchrohr 32, den Zulaufanschlussstutzen 33 und den Zulauftrichter 34 jeweils ein Kunststoff, insbesondere ein Kunststoff aus der Gruppe Polyethylen (PE) oder Polypropylen (PP), Polyvinylchlorid (PVC), Styrol-Copolymerisate (ABS/ASA) und Polyesterharz (UP). Bevorzugt ist die Ablaufeinrichtung 1 mit all ihren Bestandteilen aus dem gleichen Material hergestellt, wobei etwaige Dichtringe auch aus abweichenden Materialien bestehen können.

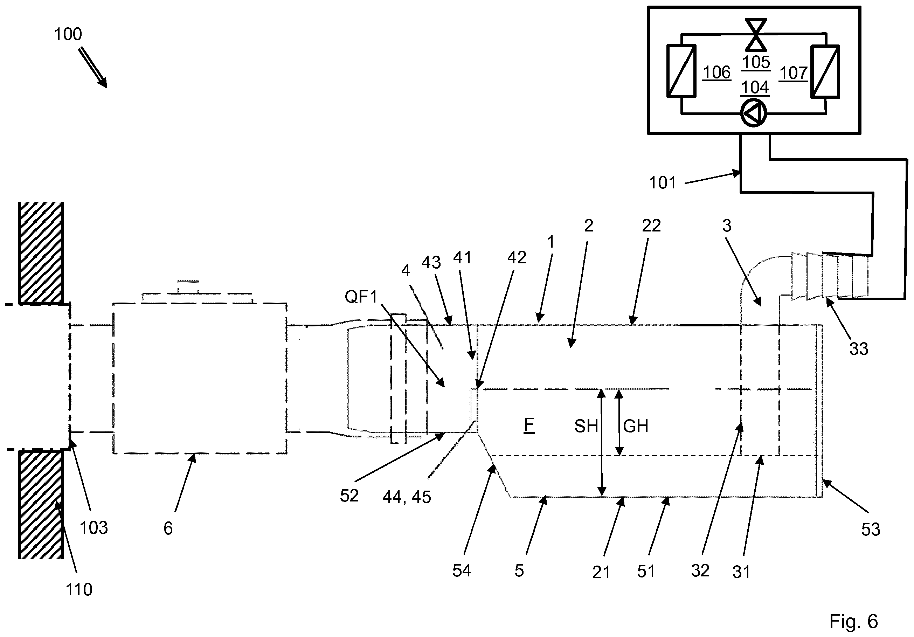

**Fig. 6** ist eine Schemaskizze einer Wärmepumpenvorrichtung 100 mit einer Ablaufeinrichtung 1 gemäß Fig. 1 zu entnehmen. Hinsichtlich der Bestandteile der Ablaufeinrichtung 1 wird daher zunächst auf die Beschreibung der Fig. 1 verwiesen. Zusätzlich erkennt man in Fig. 6, dass die Wärmepumpenvorrichtung 100 einen Verdichter 104, eine Drossel 105, einen Kondensator 106 und einen Verdampfer 107 aufweist. Diesen ist ein Kondensatsammler mit einem Kondensatablauf 101 zugeordnet. Der rohrförmige Kondensatablauf 101 mündet in den Zulauf 3 der Ablaufeinrichtung 1 ein. Die an den Ablaufrohrabschnitt 43 mittelbar über die Rückstauklappe 6 angeschlossene Entwässerungsrohrleitung 103 führt auf der geodätischen Höhe des horizontal verlaufenden Ablaufrohrabschnitts 43 durch eine Gebäudewand 110. Alternativ zu der Wärmepumpenvorrichtung 100 kann auch eine Lüftungsvorrichtung, die beispielsweise einen (Kreuz-) Gegenstromwärmetauscher aufweist, mit ihrem Kondensatablauf in den Zulauf 3 der Ablaufeinrichtung 1 einmünden. Außerdem können eine Wärmepumpen- und eine Lüftungsvorrichtung miteinander kombiniert sein, um einen Luftstrom mit der Wärmepumpe zu temperieren.

**Bezugszeichenliste**

| | | | |
|---|---|---|---|
| 1 | Ablaufeinrichtung | 53 | Verschlusselement |
| | | 54 | Reduktionsabschnitt |
| 2 | Gehäuse | | |
| 21 | Gehäuseboden | 6 | Rückstauklappe |
| 22 | Gehäusedecke | | |
| | | 100 | Wärmepumpen- und/oder |
| 3 | Zulauf | | Lüftungsvorrichtung |
| 31 | Zulauföffnung | 101 | Kondensatablauf |
| 32 | Tauchrohr | 103 | Entwässerungsrohrleitung |
| 33 | Zulaufanschlussstutzen | 104 | Verdichter |
| 34 | Zulauftrichter | 105 | Drossel |
| | | 106 | Kondensator |
| 4 | Ablauf | 107 | Verdampfer |
| 41 | Durchtrittsöffnung | | |
| 42 | Überlaufscheitel | 110 | Gebäudewand |
| 43 | Ablaufrohrabschnitt | | |
| 44 | Blende | F | Fluid |
| 45 | Deckel | GH | Geruchsverschlusshöhe |
| | | QF1 | Rohrquerschnittsfläche |
| 5 | Übergangsrohrstück | SH | Stauhöhe |
| 51 | erster Rohrabschnitt | | |
| 52 | zweiter Rohrabschnitt | | |

## Patentansprüche

1. **Ablaufeinrichtung** (1)
- mit einem als Sammelbehälter ausgebildeten Gehäuse (2) mit einem geodätisch unten angeordneten Gehäuseboden (21), und
- mit einem in das Gehäuse einmündenden Zulauf (3) und einem geodätisch seitlich am Gehäuse (2) angeordneten Ablauf (4),
- wobei der Ablauf (4) eine Durchtrittsöffnung (41) aufweist,
o die einen geodätisch untenliegenden Überlaufscheitel (42) ausbildet, der höher angeordnet ist als der Gehäuseboden (21),
- wobei der Zulauf (3) eine Zulauföffnung (31) aufweist, die in das Gehäuse (2) mündet und geodätisch tiefer angeordnet ist als der Überlaufscheitel (42),
- wobei der Ablauf (4) einen horizontal verlaufenden Ablaufrohrabschnitt (43) mit einer Rohrquerschnittsfläche (QF1) aufweist, die höher angeordnet ist als der Gehäuseboden (21), und
- wobei der Überlaufscheitel (42) geodätisch oberhalb von einem geodätisch untenliegenden Ende der Rohrquerschnittsfläche (QF1) angeordnet ist,
**dadurch gekennzeichnet, dass**
- die Ablaufeinrichtung (1) ein Übergangsrohrstück (5) aufweist, das eine Reduktion von einem ersten Rohrabschnitt (51) mit einem größeren Rohrquerschnitt auf einen zweiten Rohrabschnitt (52) mit einem kleineren Rohrquerschnitt ausbildet,
- wobei das Gehäuse (2) von dem ersten Rohrabschnitt (51) und einem Verschlusselement (53), das das freie Ende des ersten Rohrabschnitts (51) verschließt, ausgebildet ist, und
- wobei der horizontal verlaufende Ablaufrohrabschnitt (43) von dem zweiten Rohrabschnitt (52) ausgebildet ist.

2. Ablaufeinrichtung (1) nach Anspruch 1, **dadurch gekennzeichnet, dass** die Durchtrittsöffnung (41) des Ablaufs (4) in einer Blende (44) ausgebildet ist.

3. Ablaufeinrichtung (1) nach Anspruch 2, **dadurch gekennzeichnet, dass** die Blende (44) in dem horizontal verlaufenden Ablaufrohrabschnitt (43) sitzt.

4. Ablaufeinrichtung (1) nach einem der Ansprüche 2 oder 3, **dadurch gekennzeichnet, dass** die Blende (44) aus Richtung des Gehäuses (2) kommend in den horizontal verlaufenden Ablaufrohrabschnitt (43) eingesetzt ist.

5. Ablaufeinrichtung (1) nach einem der Ansprüche 2 bis 4, **dadurch gekennzeichnet, dass** die Blende (44) durch einen Deckel (45) ausgebildet ist, wobei die Durchtrittsöffnung (41) in dem Deckel (45) ausgebildet ist.

6. Ablaufeinrichtung (1) nach einem der vorhergehenden Ansprüche, **dadurch gekennzeichnet, dass** der horizontal verlaufende Ablaufrohrabschnitt (43) aus der Gruppe DN 40, DN 50, DN 70, DN 80, DN 110 und DN 125 ist.

7. Ablaufeinrichtung (1) nach einem der vorhergehenden Ansprüche, **dadurch gekennzeichnet, dass** der erste und der zweite Rohrabschnitt (51, 52) des Übergangsrohrabschnitts (5) gleich ausgerichtet sind und der zweite Rohrabschnitt (52) versetzt zum ersten Rohrabschnitt (51) angeordnet ist, wobei ein Versatz vorliegt, bei dem der zweite Rohrabschnitt (52) geodätisch höher angeordnet ist als der erste Rohrabschnitt (51), wobei der Rohrquerschnitt des zweiten Rohrabschnitts (52) ganz oder zumindest zur Hälfte in der horizontalen Projektion des Rohrquerschnitts des ersten Rohrabschnittes (51) liegt.

8. Ablaufeinrichtung (1) nach einem der vorhergehenden Ansprüche, **dadurch gekennzeichnet, dass** der erste Rohrabschnitt (51) aus der Gruppe DN 70, DN 80, DN 100, DN 110, DN 125 und DN 160 ist.

9. Ablaufeinrichtung (1) nach einem der vorhergehenden Ansprüche, **dadurch gekennzeichnet, dass** der Zulauf (3) ein Tauchrohr (32) aufweist, das innerhalb von dem Gehäuse (2) geodätisch bis unter den Überlaufscheitel (42) ragt und endseitig die Zulauföffnung (31) ausbildet.

10. Ablaufeinrichtung (1) nach Anspruch 9, **dadurch gekennzeichnet, dass** der Zulauf (3) einen Zulaufanschlussstutzen (33) oder einen Zulauftrichter (34) aufweist, der mit dem Tauchrohr (32) strömungsverbunden ist.

11. Ablaufeinrichtung (1) nach einem der vorhergehenden Ansprüche, **dadurch gekennzeichnet, dass** diese auf Seiten des Ablaufrohrabschnitts (43) eine Rückstauklappe (6) aufweist.

12. Ablaufeinrichtung (1) nach einem der vorhergehenden Ansprüche, **dadurch gekennzeichnet, dass** das Gehäuse (2) eine geodätisch oben angeordnete Gehäusedecke (22) aufweist, wobei die Rohrquerschnittsfläche (QF1) des horizontal verlaufenden Ablaufrohrabschnitts (43) geodätisch nicht höher angeordnet ist als die Gehäusedecke (22).

13. **Wärmepumpen- und/oder Lüftungsvorrichtung** (100) mit einer Ablaufeinrichtung (1) gemäß einem der vorhergehenden Ansprüche und mit einem Kondensatablauf (101), der in den Zulauf (3) der Ablaufeinrichtung (1) einmündet.

14. Wärmepumpen- und/oder Lüftungsvorrichtung (100) nach Anspruch 13, **dadurch gekennzeichnet, dass** der Ablaufrohrabschnitt (43) an eine Entwässerungsrohrleitung (103) angeschlossen ist.

15. Wärmepumpen- und/oder Lüftungsvorrichtung (100) nach einem der Ansprüche 13 oder 14, **dadurch gekennzeichnet, dass** die Entwässerungsrohrleitung (103) auf der geodätischen Höhe des horizontal verlaufenden Ablaufrohrabschnitts (43) durch eine Gebäudewand (110) führt.

## Claims

1. **Draining device** (1)
- with a housing (2) designed as a collecting container with a housing base (21) arranged geodetically at the bottom, and
- with an inlet (3) opening into the housing and a drain (4) arranged in a geodetically on the side of the housing (2),
- wherein the drain (4) has a passage opening (41),
- which forms a geodetically lower overflow apex (42), which is arranged higher than the housing base (21),
- wherein the inlet (3) has an inlet opening (31), which opens into the housing (2) and is arranged geodetically lower than the overflow apex (42),
- wherein the drain (4) has a horizontally extending drain pipe section (43) with a pipe cross-sectional area (QF1), which is arranged higher than the housing base (21), and
- wherein the overflow apex (42) is arranged geodetically above a geodetically lower end of the pipe cross-sectional area (QF1),
**characterised in that**
- the draining device (1) has a transition pipe piece (5), which forms a reduction of a first pipe section (51) with a larger pipe cross section on a second pipe section (52) with a smaller pipe cross section,
- wherein the housing (2) is formed from the first pipe section (51) and a closure element (53), which closes the free end of the first pipe section (51), and
- wherein the horizontally extending drain pipe section (43) is formed by the second pipe section (52).

2. Draining device (1) according to claim 1, **characterised in that** the passage opening (41) of the drain (4) is formed in a diaphragm (44).

3. Draining device (1) according to claim 2, **characterised in that** the diaphragm (44) is seated in the horizontally extending drainpipe section (43).

4. Draining device (1) according to any one of claims 2 or 3, **characterised in that** the diaphragm (44) is inserted coming from the direction of the housing (2) in the horizontally extending drainpipe section (43).

5. Draining device (1) according to any one of claims 2 to 4, **characterised in that** the diaphragm (44) is formed by a cover (45), wherein the passage opening (41) is formed in the cover (45).

6. Draining device (1) according to any one of the preceding claims, **characterised in that** the horizontally extending drain pipe section (43) is from the group DN 40, DN 50, DN 70, DN 80, DN 110 and DN 125.

7. Draining device (1) according to any one of the preceding claims, **characterised in that** the first and the second pipe section (51, 52) of the transition pipe section (5) are of the same orientation and the second pipe section (52) is arranged offset to the first pipe section (51), wherein an offset exists, in which the second pipe section (52) is arranged geodetically higher than the first pipe section (51), wherein the pipe cross section of the second pipe section (52) lies entirely or at least half in the horizontal projection of the pipe cross section of the first pipe section (51).

8. Draining device (1) according to any one of the preceding claims, **characterised in that** the first pipe section (51) is from the group DN 70, DN 80, DN 100, DN 110, DN 125 and DN 160.

9. Draining device (1) according to any one of the preceding claims, **characterised in that** the inlet (3) has a dip pipe (32), which protrudes within the housing (2) geodetically to below the overflow apex (42) and forms the inlet opening (31) on the end side.

10. Draining device (1) according to claim 9, **characterised in that** the inlet (3) has an inlet connection piece (33) or an inlet funnel (34), which is flow-connected to the dip pipe (32).

11. Draining device (1) according to any one of the preceding claims, **characterised in that** said draining device has a non-return flap (6) on the side of the drain pipe section (43).

12. Draining device (1) according to any one of the preceding claims, **characterised in that** the housing (2) has a housing cover (22) arranged geodetically above, wherein the pipe cross-sectional area (QF1) of the horizontally extending drain pipe section (43) is not arranged geodetically higher than the housing cover (22).

13. **Heat pump- and/or ventilation device** (100) with a draining device (1) according to any one of the preceding claims and with a condensate drain (101), which opens into the inlet (3) of the draining device (1).

14. Heat pump- and/or ventilation device (100) according to claim 13, **characterised in that** the drainpipe section (43) is connected to a drainage pipeline (103).

15. Heat pump- and/or ventilation device (100) according to any one of claims 13 or 14, **characterised in that** the drainage pipeline (103) runs through a building wall (110) at the geodetic height of the horizontally extending drainpipe section (43).

## Revendications

1. **Dispositif d'évacuation** (1)
- avec un boîtier (2) réalisé en tant que collecteur avec un fond de boîtier (21) agencé en bas du point de vue géodésique, et
- avec une amenée (3) débouchant dans le boîtier et une évacuation (4) agencée sur le côté du point de vue géodésique au niveau du boîtier (2),
- dans lequel l'évacuation (4) présente une ouverture de passage (41),
- qui forme un sommet de trop-plein (42) sous-jacent du point de vue géodésique, qui est agencé plus haut que le fond de boîtier (21),
- dans lequel l'amenée (3) présente une ouverture d'amenée (31), qui débouche dans le boîtier (2) et est agencée plus bas du point de vue géodésique que le sommet de trop-plein (42),
- dans lequel l'évacuation (4) présente une section de tube d'évacuation (43) s'étendant horizontalement avec une section transversale de tube (QF1), qui est agencée plus haut que le fond de boîtier (21), et
- dans lequel le sommet de trop-plein (42) est agencé du point de vue géodésique au-dessus d'une extrémité sous-jacente du point de vue géodésique de la section transversale de tube (QF1),
**caractérisé en ce que**
- le dispositif d'évacuation (1) présente une section de tube de transition (5), qui forme une réduction d'une première section de tube (51) avec une section transversale de tube plus grande à une deuxième section de tube (52) avec une section transversale de tube plus petite,
- dans lequel le boîtier (2) est formé par la première section de tube (51) et un élément de fermeture (53), qui ferme l'extrémité libre de la première section de tube (51), et
- dans lequel la section de tube d'évacuation (43) s'étendant horizontalement est formée par la deuxième section de tube (52).

2. Dispositif d'évacuation (1) selon la revendication 1, **caractérisé en ce que** l'ouverture de passage (41) de l'évacuation (4) est réalisée dans un diaphragme (44).

3. Dispositif d'évacuation (1) selon la revendication 2, **caractérisé en ce que** le diaphragme (44) siège dans la section de tube d'évacuation (43) s'étendant horizontalement.

4. Dispositif d'évacuation (1) selon l'une quelconque des revendications 2 ou 3, **caractérisé en ce que** le diaphragme (44) est inséré depuis le boîtier (2) dans la section de tube d'évacuation (43) s'étendant horizontalement.

5. Dispositif d'évacuation (1) selon l'une quelconque des revendications 2 à 4, **caractérisé en ce que** le diaphragme (44) est réalisé à travers un couvercle (45), dans lequel l'ouverture de passage (41) est réalisée dans le couvercle (45).

6. Dispositif d'évacuation (1) selon l'une quelconque des revendications précédentes, **caractérisé en ce que** la section de tube d'évacuation (43) s'étendant horizontalement est tirée du groupe DN 40, DN 50, DN 70, DN 80, DN 110 et DN 125.

7. Dispositif d'évacuation (1) selon l'une quelconque des revendications précédentes, **caractérisé en ce que** la première et la deuxième section de tube (51, 52) de la section de tube de transition (5) sont orientées de la même manière et la deuxième section de tube (52) est agencée de manière décalée par rapport à la première section de tube (51), dans lequel il y a un décalage, dans lequel la deuxième section de tube (52) est agencée plus haut du point de vue géodésique que la première section de tube (51), dans lequel la section transversale de tube de la deuxième section de tube (52) se trouve complétement ou au moins à moitié dans la projection horizontale de la section transversale de tube de la première section de tube (51).

8. Dispositif d'évacuation (1) selon l'une quelconque des revendications précédentes, **caractérisé en ce que** la première section de tube (51) est tirée du groupe DN 70, DN 80, DN 100, DN 110, DN 125 et DN 160.

9. Dispositif d'évacuation (1) selon l'une quelconque des revendications précédentes, **caractérisé en ce que** l'amenée (3) présente un tube plongeur (32), qui dépasse à l'intérieur du boîtier (2) du point de vue géodésique jusque sous le sommet de trop-plein (42) et forme côté extrémité l'ouverture d'amenée (31).

10. Dispositif d'évacuation (1) selon la revendication 9, **caractérisé en ce que** l'amenée (3) présente une tubulure de raccord d'amenée (33) ou une trémie d'amenée (34), qui est reliée en écoulement au tube plongeur (32).

11. Dispositif d'évacuation (1) selon l'une quelconque des revendications précédentes, **caractérisé en ce que** celui-ci présente un clapet anti-retour (6) sur les côtés de la section de tube d'écoulement (43).

12. Dispositif d'évacuation (1) selon l'une quelconque des revendications précédentes, **caractérisé en ce que** le boîtier (2) présente un recouvrement de boîtier (22) agencé en haut du point de vue géodésique, dans lequel la section transversale de tube (QF1) de la section de tube d'évacuation (43) s'étendant horizontalement est agencée du point de vue géodésique pas plus haut que le recouvrement de boîtier (22).

13. **Dispositif de pompe à chaleur et/ou de ventilation** (100) avec un dispositif d'évacuation (1) selon l'une quelconque des revendications précédentes et avec une évacuation de condensat (101), qui débouche dans l'amenée (3) du dispositif d'évacuation (1).

14. Dispositif de pompe à chaleur et/ou de ventilation (100) selon la revendication 13, **caractérisé en ce que** la section de tube d'évacuation (43) est raccordée à une conduite de drainage (103).

15. Dispositif de pompe à chaleur et/ou de ventilation (100) selon l'une quelconque des revendications 13 ou 14, **caractérisé en ce que** la conduite de drainage (103) conduit à la hauteur géodésique de la section de tube d'évacuation (43) s'étendant horizontalement à travers une paroi de bâtiment (110).
